# EUROPEAN PATENT APPLICATION

(11) **EP 2 921 393 A1**
(43) Date of publication of application: **23.09.2015**
(21) Application number: 14193563.5
(22) Date of filing: 17.11.2014
(51) Int. Cl.: B62K 25/04, B62K 3/00

(54) **A concealed rear wheel suspension device for a scooter**

(30) Priority: 17.03.2014 CN 201420132633 U
(71) Applicant: Zhejiang Freedare Sports Equipment Co., Ltd., XiHu district 310012 (CN)
(72) Inventor: Xu, YongQiang, 310012 XiHu district (CN); Qian, Yong, 310012 XiHu district (CN)
(74) Representative: Lang, Christian

(57) **Abstract**

The present application discloses a concealed rear wheel suspension device for a scooter, which comprisies a frame compoment, a suspension spring compoment and a back fork (10), the frame compoment includes a frame cover (1), a frame (2) and a stop (3) fixedly connected to the rear of the frame (2), a through hole is set on two sides of the rear of the frame; the suspension spring compoment comprises a link (6). A threaded end of the link (6) comprises sequentially across through the stop (3), a compression spring (7) and a washer (5), the threaded end is locked by a nut (4); two sets of holes are located on the front end of the back fork (10) along the vertical direction, wherein upper holes are rotatably connected to the through hole on the two sides of the frame (2) through bolts (12), and lower holes are connected to a hole end of the link through plugs (9).

## Description

### CROSS-REFERENCE TO RELATED APPLICATIONS

The present application claims priority based on Chinese Application No. 201420132633.3 filed March 17, 2014, the disclosure of which is hereby incorporated by reference in its entirety.

### TECHNICAL FIELD

The present application relates to a concealed rear wheel suspension device for a scooter.

### BACKGROUND

The structure of scooter is simple and it is convenient for carrying, so it has become many people's recreational sports and even travel tools. However, when the road is rugged, it will be uncomfortable for the vertical impact force. Wen the gap is large, the security of user will be threatened. At the same time,the life of the scooter will also be shorten. By now, some designs try to set a suspension device between the wheels and the frame to resolve the above problems. However, the existing designs are open, its suspension effect is completed by the mutual movement of the parts of the suspension device by transform the impact load. But the objects are easy drawn into the open designed suspension device, then influence relative motion of the parts of suspension device, resulting the suspension effect inadequate or even make it has no suspension effect.

### SUMMARY

The present application is directed to a concealed rear wheel suspension device for a scooter, which is effectively ensure the security of the scooter and increase comfort of userr. At the same time, the life of the scooter is effectively increased.

An embodiment of the present application provides a concealed rear wheel suspension device for a scooter, which comprising a frame compoment, a suspension spring compoment and a back fork, the frame compoment includes a frame cover, a frame and a stop fixedly connected to the rear of the frame, a through hole is set on two sides of the rear of the frame, several threaded holes are set on the upper surface of the stop, another through hole is set on the frame cover corresponded to the threaded holes; The suspension spring compoment comprises a link. A threaded end of the link sequentially across through the stop, a compression spring and a gasket with a hole in the middle of it, the threaded end is locked by a nut; two sets of holes are located on the front end of the back fork along the vertical direction, wherein upper holes are rotatably connected to the through hole on the two sides of the frame through bolts, and lower holes are connected to a hole end of the link through plugs.

Preferably, a fitting groove for installing wheels is set on the rear end of the back fork.

Preferably, a retaining ring is provided on one end of the plugs.

It is to be understood that both the foregoing general description and the following detailed description are exemplary only and are not necessarily restrictive of the disclosure as claimed. The accompanying drawings, which are incorporated in and constitute a part of the specification, illustrate an embodiment of the disclosure and together with the general description, serve to explain the principle of the disclosure.

### BRIEF DESCRIPTION OF THE DRAWINGS

The numerous advantages of the present application may be better understood by those skilled in the art by reference to the accompanying figures in which:
Fig.1 is a structure diagram of a concealed rear wheel suspension device for a scooter according to the present application; and
Fig.2 is an exploded view of a concealed rear wheel suspension device for a scooter according to the present application; and
Fig.3 is a work status view1 of a concealed rear wheel suspension device for a scooter according to the present application; and
Fig.4 is a work status view2 of a concealed rear wheel suspension device for a scooter according to the present application.

### DETAILED DESCRIPTION

Reference will now be made in detail to the subject matter disclosed, which is illustrated in the accompanying drawings.

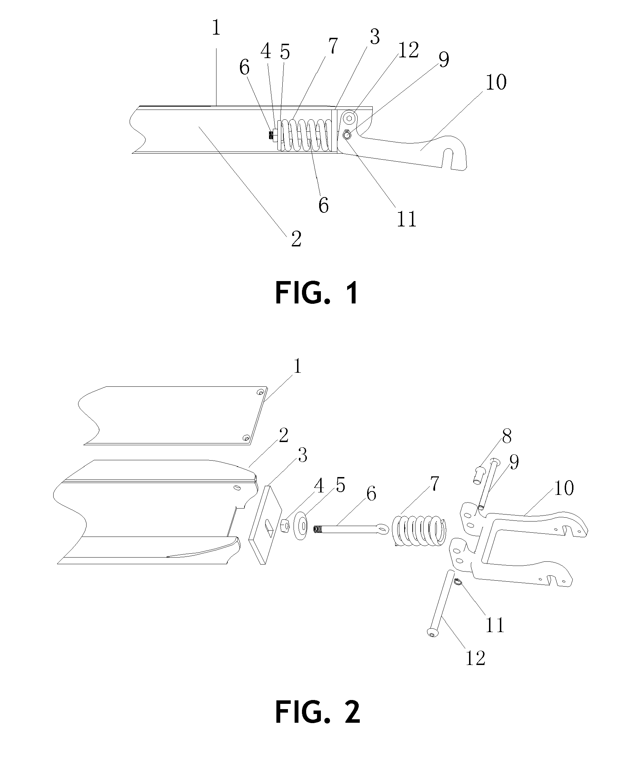

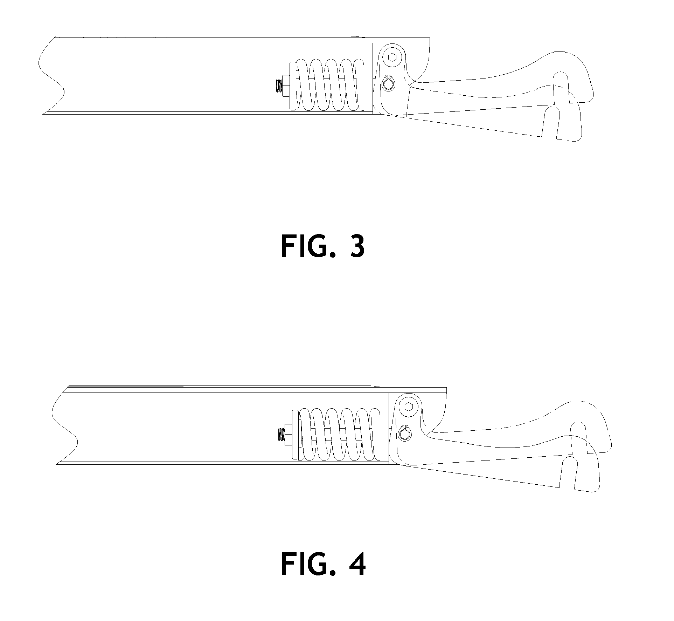

Referring to Fig. 1 to Fig. 4, present application provides a concealed rear wheel device for a scooter, which comprises a frame compoment, a suspension spring compoment and a back fork, the frame compoment includes a frame cover 1, a frame 2 and a stop 3 fixedly connected to the rear of the frame 2, two sides of the rear of the frame provides a through hole, the surface of the stop 3 provides several threaded holes, the corresponding position of the frame cover 1 and the threaded holes provides another through hole, the suspension spring compoment comprises a link 6, and a threaded end of the link 6 sequentially across through the stop 3, the compression spring 7 and the gasket 5 with a hole in the middle of it, and use a nut 4 to lock the threaded end; along the vertical direction of the front end of the back fork 10 provide two sets of holes, wherein upper holes are rotatably connected to the through hole on the two sides of the frame 2 through bolts 12, and lower holes are connected to a hole end of the link 6 through plugs 9, the rear end of the back fork 10 provides a fitting groove which used to install the wheels, one end of the plug 9 provides a retaining ring 11.

In use, concealed design completely blocked the objects entering the inside of the suspension device, ensured relative motion of the parts of suspension device, bring into full play about seismic performance of the suspension device.

In the process of driving, when roads are rugged, the back fork 10 will receive the impact force from the rear wheel , the back fork compoment will rotate upward around the bolt 12, use the link6 to pull the compress spring 7, then the compress spring 7 be compressed, impact force along the vertical direction is transformed to reserve potential of the compress spring through the spring compoment, then the frame 2 just has a slight movement in the vertical direction, so it is effectively ease the impact force of the vertical direction.

When the roads are flatted, the received impact force of the back fork 10 will revoke, then the reserve potential will force the link 6 to pull the back fork 10 forward, the back fork 10 then rotate downward around the bolt 12 to reset until the back fork 10 contacts with the stop 3. Then it can achieve the seismic effect.

## Claims

1. A concealed rear wheel device for a scooter, which comprising:
a frame compoment, comprising a frame cover, a frame and a stop fixedly connected to the rear of the frame;
a suspension spring compoment, comprising a link; and
a back fork,
wherein a through hole is set on two sides of the rear of the frame, several threaded holes are set on the upper surface of the stop, another through hole is set on the frame cover corresponded to the threaded holes; a threaded end of the link sequentially across through the stop, a compression spring and a gasket with a hole in the middle of it, the threaded end is locked by a nut; two sets of holes are located on the front end of the back fork along the vertical direction, wherein upper holes are rotatably connected to the through hole on the two sides of the frame through bolts, and lower holes are connected to a hole end of the link through plugs.

2. The concealed rear wheel device for a scooter according to claim 1, wherein a fitting groove for installing wheels is set on the rear end of the back fork.

3. The concealed rear wheel device for a scooter according to claim 2, wherein a retaining ring is provided on one end of the plugs.
